# EUROPEAN PATENT APPLICATION

(11) **EP 3 872 731 A1**
(43) Date of publication of application: **01.09.2021**
(21) Application number: 21155312.8
(22) Date of filing: 04.02.2021
(51) Int. Cl.: G06Q 20/20, G06Q 20/40, G07G 1/00, G07G 1/06, G07G 1/14

(54) **CASH BALANCE CHECK SYSTEM, METHOD CARRIED OUT BY CASH BALANCE CHECK SYSTEM, AND NON-TRANSITORY COMPUTER READABLE MEDIUM**

(30) Priority: 25.02.2020 JP 2020029474
(71) Applicant: Toshiba TEC Kabushiki Kaisha, Tokyo 141-8562 (JP)
(72) Inventor: Shimomura, Hiroshi, Shinagawa-ku, Tokyo 141-8562 (JP)
(74) Representative: Bandpay & Greuter

(57) **Abstract**

A cash balance check system includes a plurality of settlement devices each configured to perform settlement processing for commodities to be purchased by a customer and a plurality of change machines each corresponding to one of the settlement devices. The change machines being configured to perform cash deposit and dispense processing for the settlement processing. Each of the change machines is configured to generate cash balance information indicating a remaining amount of cash in the change machine and output the cash balance information in association with identification information for the change machine. Each of the settlement devices is configured to acquire the balance and identification information output from the change machines and output the acquired cash balance and identification information. (FIG. 1)

## Description

### FIELD

Embodiments described herein relate generally to a cash balance check system, a method carried out by the cash balance check system, and a non-transitory computer readable medium.

### BACKGROUND

Retail payment settlement devices, such as a self-service POS (Point of Sales) terminal, with which a customer performs a sales registration operation and a settlement operation, and a semi-self-service POS terminal with which a store clerk performs the sales registration operation and then the customer performs settlement operation are known.

A change machine that dispenses bills or coins as the change, when a customer makes a settlement payment with cash and/or coins change, is typically connected to such payment settlement devices. If a cash balance in the change machine falls below some threshold, then cash transactions cannot be performed at the settlement devices connected to the change machine with the too low balance. The cash balance of each of a plurality of change machines set in the store can be centrally managed by a management computer or the like set in a back office of the store.

However, in related art, in order to check the cash balance of each of the plurality of change machines in a store, the store clerk has to individually refer to the cash balances in the self-service POS terminal connected to the change machines or refer to the cash balances in the management computer set in the back office. This work takes time.

### BRIEF DESCRIPTION OF THE DRAWINGS

FIG. 1 is a diagram illustrating a POS system according to an embodiment.
FIG. 2 is a diagram illustrating self-service POS terminals and change machines connected to each other according to an embodiment.
FIG. 3 is a diagram illustrating a determination result about usability of self-service POS terminals.
FIG. 4 is a diagram illustrating cash balance information according to an embodiment.
FIG. 5 is a diagram illustrating a guidance screen according to an embodiment.
FIG. 6 is a hardware diagram of a self-service POS terminal.
FIG. 7 is a functional diagram of a self-service POS terminal.
FIG. 8 is a diagram illustrating cash balance information for each of change machines stored in a self-service POS terminal.
FIG. 9 is a diagram illustrating a cash balance check screen according to an embodiment.
FIG. 10 is a hardware diagram of a change machine.
FIG. 11 is a functional diagram of a change machine.
FIG. 12 is a flowchart of processing for cash balance information executed by a change machine.
FIG. 13 is a flowchart of cash balance check processing executed by a self-service POS terminal.
FIG. 14 is a flowchart of cash balance display processing executed by a self-service POS terminal.

### DETAILED DESCRIPTION

According to one embodiment, a cash balance check system includes a plurality of settlement devices, each configured to perform settlement processing for commodities to be purchased by a customer, and a plurality of change machines, each corresponding to one of the settlement devices and configured to perform cash deposit and dispense processing during the settlement processing. Each of the change machines is configured to generate cash balance information indicating a remaining amount of cash in the change machine and output the cash balance information in association with identification information for the generating change machine. Each of the settlement devices is configured to acquire the cash balance and identification information that have been output from each of the change machines and output the acquired cash balance and identification information for each of the change machines.

Preferably, each of the settlement devices includes a display. The cash balance and identification information for each of the change machines is output via the display.

Preferably, the cash balance check system further comprises a display device. Each of the settlement devices is further configured to: determine, based on the acquired cash balance and identification information, whether the remaining amount of cash in each of the change machines falls within a particular range; identify a status from a plurality of possible statuses for each of the settlement devices based on the remaining amount of cash; and transmit the status of each of the settlement devices to the display device.

Preferably, the plurality of possible statuses includes a first status indicating that the settlement device is available for the settlement processing and a second status indicating that the settlement device is unavailable for the settlement processing.

Preferably, when the remaining amount of cash in one of the change machines falls within the particular range, the status of the corresponding settlement device is determined to be the first status, and, when the remaining amount of cash in another one of the change machines does not fall within the particular range, the status of the corresponding settlement device is determined to be the second status.

Preferably, the display device is configured to display a first guidance screen indicating the status of each of the settlement devices.

Preferably, the settlement devices that have been determined to be the first status and the settlement devices that have been determined to be the second status are identified with different text on the first guidance screen.

Preferably, the settlement devices that have been determined to be the first status and the settlement devices that have been determined to be the second status are identified with different icons on the first guidance screen.

Preferably, each of the settlement devices includes a display and is further configured to display, on the display, a second guidance screen separately indicating the settlement devices that have been determined to be the first status and the settlement devices that have been determined to be the second status.

Preferably, each of the settlement devices and change machines is configured to access a virtual data storage where the cash balance and identification information from each of the change machines is stored.

There is also provided a method carried out by a cash balance check system including a plurality of settlement devices and a plurality of change machines corresponding to the respective settlement devices, the method comprising: performing settlement processing for commodities to be purchased by a customer; performing cash deposit and dispense processing during the settlement processing; generating cash balance information indicating a remaining amount of cash in each of the change machines, and outputting the cash balance information from the change machines in association with identification information for the respective change machine generating the cash balance information; and acquiring the cash balance and identification information output from each of the change machines by using at least one of the settlement devices, and outputting the acquired cash balance and identification information for each of the change machines from the at least one of the settlement devices.

Preferably, each of the settlement devices includes a display, and the cash balance and identification information are output via the display.

Preferably, the method further comprises: determining whether the remaining amount of cash in each of the change machines falls within a particular range based on the acquired balance and identification information for each of the change machines; determining a status from a plurality of possible statuses for each of the settlement devices based on the remaining amount of cash; and transmitting the determined status of each of the settlement devices to a display device included in the cash balance check system.

Preferably, the plurality of possible statuses includes a first status indicating that the settlement device is available for the settlement processing and a second status indicating that the settlement device is unavailable for the settlement processing.

Preferably, the method further comprises acquiring, from a virtual data space, the cash balance and identification information output from each of the plurality of change machines and stored in the virtual data space.

A cash balance check system according to one or more embodiments is explained below with reference to the drawings. The example embodiments explained below are not limiting of the present disclosure.

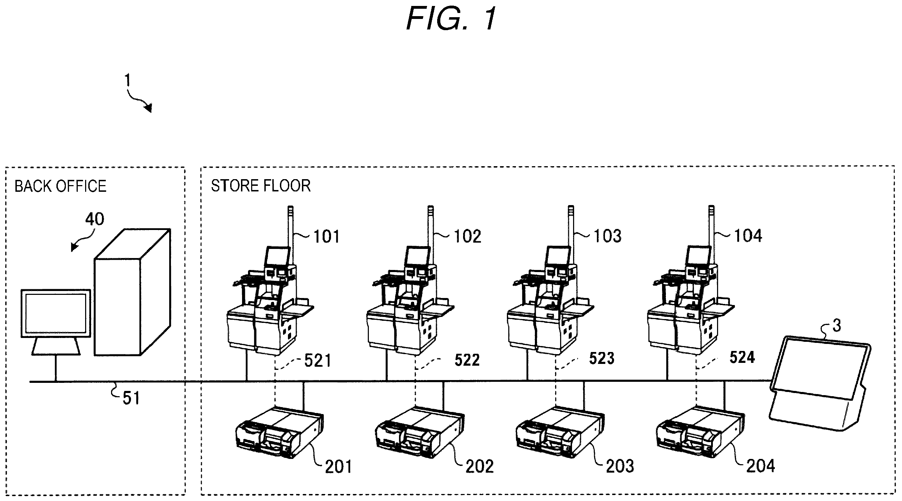

FIG. 1 is a diagram illustrating a POS (Point of Sale) system 1 according to an embodiment. The POS system 1 is an example of the cash balance check system.

As illustrated in FIG. 1, the POS system 1 includes self-service POS terminals 101 to 104, change machines 201 to 204, a display device 3, and a store computer 40. The self-service POS terminals 101 to 104, the change machines 201 to 204, the display device 3, and the store computer 40 are electrically connected by a communication line 51 such as a LAN (Local Area Network). Any numbers of the self-service POS terminals 101 to 104, the change machines 201 to 204, and the display device 3 may be included in the POS system 1.

In the following explanation, if the respective self-service POS terminals 101 to 104 are not being particularly distinguished from the others, the self-service POS terminals 101 to 104 can be referred to as self-service POS terminal(s) 10. Similarly, if the respective change machines 201 to 204 are not being particularly distinguished from the others, the change machines 201 to 204 can be referred to as change machine(s) 20.

The self-service POS terminals 10, the change machines 20, and the display device 3 are disposed on a floor of a store such as a supermarket. The store computer 40 is disposed, for example, in a back office of the store.

In an embodiment, all the self-service POS terminals 10 and all the change machines 20 included in the POS system 1 are capable of transmitting to each other and receiving data from each other through a DDS (Data Distribution Service).

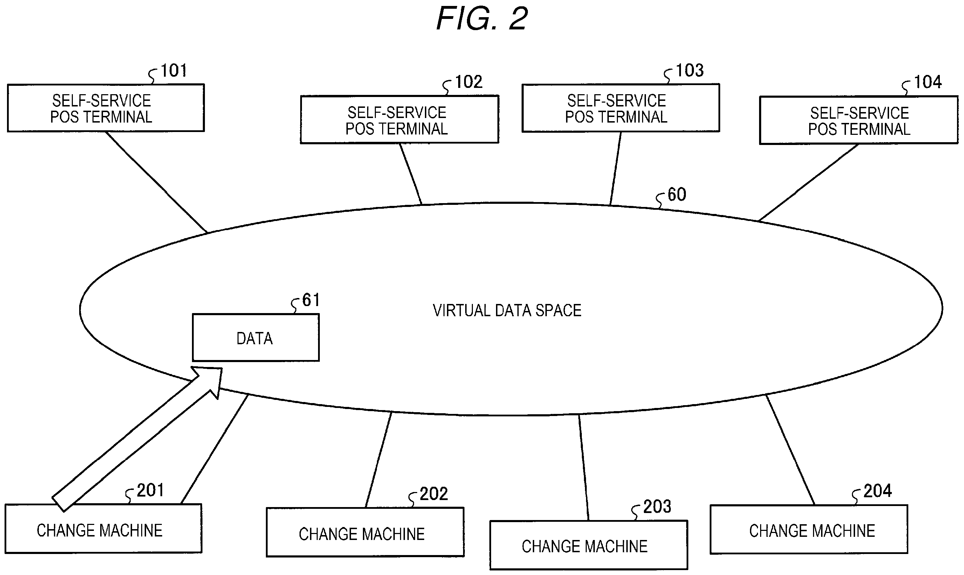

FIG. 2 is a diagram illustrating the self-service POS terminals 10 and the change machines 20 that communicate with each other using the DDS according to an embodiment. As illustrated in FIG. 2, the self-service POS terminals 101 to 104 and the change machines 201 to 204 are capable of sharing data using a virtual data space 60 of the DDS. For example, the self-service POS terminals 101 to 104 and the other change machines 202 to 204 are capable of acquiring data 61 output to the virtual data space 60 via the communication line 51 by the change machine 201. The virtual data space 60 is a virtual storage region formed by storage regions of the self-service POS terminals 101 to 104 and the change machines 201 to 204 connected via the communication line 51.

All the self-service POS terminals 10 and all the change machines 20 set in the store may be capable of communicating through the DDS. Alternatively, the self-service POS terminals 10 and the change machines 20 set in the store may be divided into several groups and the self-service POS terminals 10 and the change machines 20 belonging to the same group may be capable of communicating with each other through the DDS. In the examples illustrated in FIGS. 1 and 2, the self-service POS terminals 101 to 104 and the change machines 201 to 204 included in the POS system 1 are capable of communicating with each other through the DDS.

Referring back to FIG. 1, the self-service POS terminal 10 performs registration and payment processing for commodities to be purchased by a customer. The self-service POS terminal 10 is an example of a settlement device. More specifically, if the customer performs sales registration operation by causing the self-service POS terminal 10 to read a symbol such as a barcode attached to a commodity, the self-service POS terminal 10 executes sales registration processing for the commodity. The self-service POS terminal 10 may optically read an image of the symbol attached to the commodity and acquire a commodity code corresponding to the symbol.

If the customer performs settlement operation, the self-service POS terminal 10 executes settlement processing. The settlement processing is processing for displaying a total amount relating to a transaction based on commodity information stored in a RAM (Random Access Memory) or the like by the sales registration processing and calculating change due based on money deposited by the customer and displaying the change amount due. In the case of settlement by cash, the settlement processing includes processing for instructing the change machine 20 to dispense bills and coins as the change due back to the customer.

The settlement processing includes processing for issuing a slip or a receipt on which information concerning the commodity subjected to the sales registration processing and settlement information (e.g., a total amount, a deposit amount, a change amount, and the like) are printed. In the case of settlement by a credit card, the self-service POS terminal 10 executes settlement processing performed using the credit card.

The self-service POS terminal 10 transmits the commodity code, the commodity information, the settlement information, and the like of the commodity subjected to the settlement processing to the store computer 40 via the communication line 51. The self-service POS terminal 10 transmits balance information obtained by balancing sales occurring over a predetermined period (for example, one day) to the store computer 40 via the communication line 51.

The self-service POS terminals 10 are associated with the change machines 20 in a one-to-one relation. Specifically, the self-service POS terminals 101 to 104 and the change machines 201 to 204 are electrically connected by respective connection lines 521 to 524. In the following explanation, as long as each of the connection lines 521 to 524 is not particularly distinguished from the others, the connection lines 521 to 525 are referred to as connection line(s) 52.

If any one of the change machines 20 falls into an unusable state, cash settlement cannot be performed in the self-service POS terminal 10 associated with the change machine 20. The change machine 20 is in the unusable state, for example, if a cash balance in the change machine 20 falls below a threshold. In the POS system 1 in an embodiment, the self-service POS terminal 10 that cannot perform the cash settlement stops to perform commodity registration processing and payment processing.

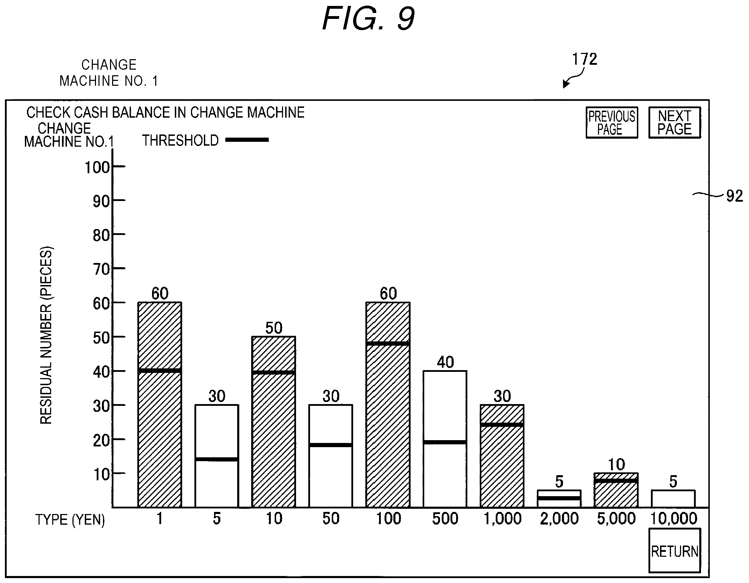

The self-service POS terminals 10 output a cash balance information acquired from the change machines 20 for each of the change machines 20. For example, the store clerk is capable of checking, from any of the self-service POS terminals 101 to 104, cash balance information for all the change machines 201 to 204 belonging to the POS system 1. Details of the display of the cash balance information is explained below with reference to FIG. 9.

The self-service POS terminals 10 determine usability of each of the self-service POS terminals 10 based on the cash balance information transmitted from the corresponding change machines 20 and transmit usability information indicating the usability of each of the self-service POS terminals 10 to the display device 3. The usability information includes identification information for specifying each of the self-service POS terminals 10 in association with the usability of the self-service POS terminal 10.

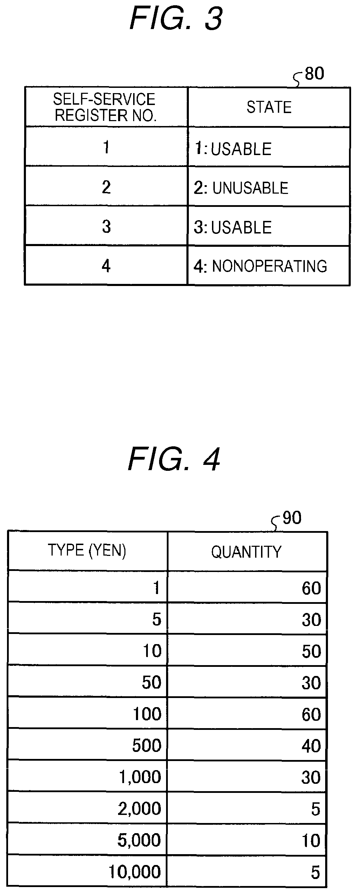

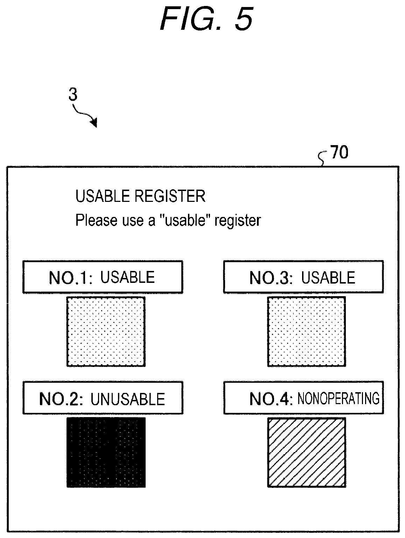

FIG. 3 is a diagram illustrating determination data 80 about the usability of the self-service POS terminals 10 according to an embodiment. The column "Self-service register NO." illustrated in FIG. 3 is identification information for specifying each of the self-service POS terminals 10. The column "State" represents the present usability of each of the self-service POS terminals 10. For example, the self-service POS terminal 10 associated with a change machine with a cash balance less than the threshold is represented as "unusable" or "unavailable". The self-service POS terminal 10 associated with the change machine 20 with a cash balance is equal to or greater than the threshold is represented as "usable" or "available". The self-service POS terminal 10 associated with a change machine 20 that is not operating (e.g., malfunctioning) is represented as "nonoperating". In an embodiment, each of the self-service POS terminals 10 outputs image data representing the determination result of the usability of the self-service POS terminal 10 to the display device 3 as the usability information. Details of the image data are explained below with reference to FIG. 5.

Referring back to FIG. 1, the change machine 20 receives an instruction from the self-service POS terminal 10 and accepts and dispenses bills and/or coins related to payment processing. In the following explanation, the bills and the coins are collectively referred to as cash payment. The change machine 20 is housed, for example, in a housing of the self-service POS terminal 10. In some examples, the change machine 20 may be set near the self-service POS terminal 10.

The change machine 20 associates the cash balance information of the change machine 20 itself with the identification information of the change machine 20 itself and outputs the cash balance information to all the self-service POS terminals 10 and all the change machines 20 included in the POS system 1 through the DDS. The cash balance information represents the cash balance of the change machine 20.

FIG. 4 is a diagram illustrating cash balance information 90 according to an embodiment. As illustrated in FIG. 4, the cash balance information 90 indicates the quantities of bills and coins stored in the change machine 20.

Referring back to FIG. 1, the display device 3 is provided separately from the self-service POS terminals 10 and the change machines 20. The display device 3 includes, for example, a liquid crystal display or an organic EL display. The display device 3 is set in a position where the customer can view the display device 3 before reaching the self-service POS terminal 10. For example, the display device 3 is installed on a flow line of the customer moving from a selling floor of the store to the self-service POS terminal 10.

The display device 3 displays a guidance screen based on the usability information transmitted from the self-service POS terminal 10.

The guidance screen shows the identification information of the self-service POS terminals 10 and states of the self-service POS terminal 10 in association with each other. More specifically, the guidance screen is an image that distinguishes the usable self-service POS terminals 10 from the unusable self-service POS terminals 10. In an embodiment, the usable self-service POS terminals 10 are the self-service POS terminals 10 associated, in a one-to-one relation, with the change machines 20 having cash balances equal to or more than the threshold. The unusable self-service POS terminals 10 are the self-service POS terminals 10 associated, in a one-to-one relation, with the change machines 20 having cash balances less than the threshold.

In an embodiment, further, the guidance screen distinguishes the self-service POS terminals 10 associated with the nonoperating change machines 20 in a one-to-one relation from the self-service POS terminals 10 associated with the operating change machines 20 in a one-to-one relation.

FIG. 5 is a diagram illustrating a guidance screen 70 according to an embodiment. "NO. 1" to "NO. 4" illustrated in FIG. 5 are the identification information for specifying the respective self-service POS terminals 101 to 104. In the example illustrated in FIG. 5, the guidance screen 70 displays, as a text, whether the self-service POS terminals 101 to 104 are "usable", "unusable", or "nonoperating". The guidance screen 70 displays the "usable", "unusable", and "nonoperating" self-service POS terminals 10 in different colors. The guidance screen 70 may include a message for encouraging the customer to use the "usable" self-service POS terminal 10 like "Please use a 'usable' register". Any message or indication about the status may be shown in the guidance screen 70.

The display device 3 acquires image data of the guidance screen 70 illustrated in FIG. 5 from the self-service POS terminals 10 and displays the image data. Alternatively, the display device 3 may acquire the determination data 80 explained with reference to FIG. 3 from the self-service POS terminals 10, generate image data of the screen display 70, and display an image indicated by the image data.

Referring back to FIG. 1, the store computer 40 manages commodity codes, commodity information, settlement information, balance information, and the like received from the self-service POS terminals 10. That is, the store computer 40 performs sales management processing in the store. The store computer 40 acquires the cash balance information 90 from each of the change machines 20.

The store computer 40 includes a processor such as a CPU (Central Processing Unit), one or more memories, such as a ROM (Read Only Memory) and a RAM, one or more external storage devices, such as a HDD (Hard Disk Drive) or a CD drive device, a display device such as a display, and one or more input devices, such as a keyboard and a mouse. The store computer 40 is, for example, a server or a PC (Personal Computer).

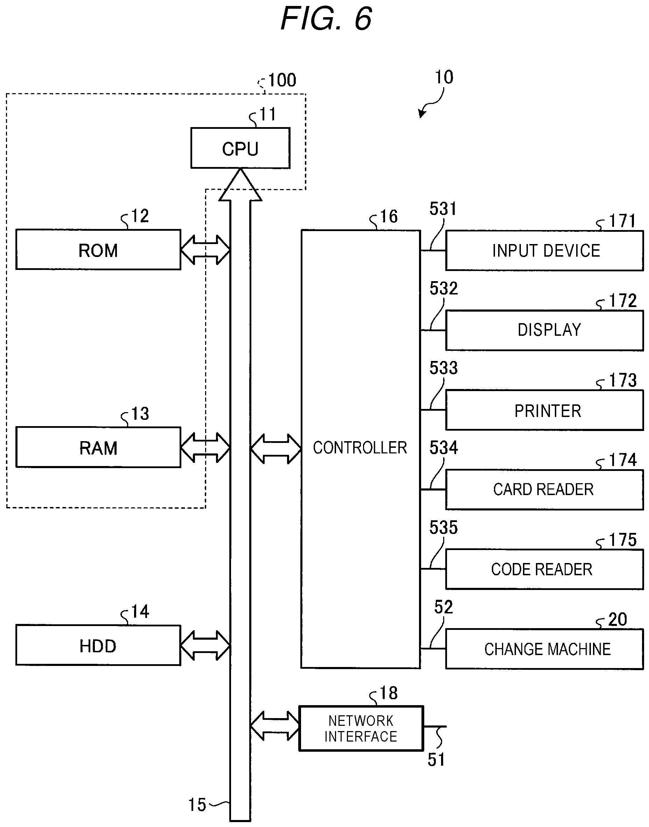

Details of the configuration of the self-service POS terminal 10 are explained. FIG. 6 is a hardware diagram of the self-service POS terminal 10 according to an embodiment. As illustrated in FIG. 6, the self-service POS terminal 10 includes a CPU 11, a ROM 12, a RAM 13, an HDD 14, a controller 16, and a network interface 18.

The ROM 12 and the HDD 14 stores various programs and/or data. The CPU 11 reads out the programs stored in the ROM 12 or the HDD 14 and loads the programs on the RAM 13 to thereby perform various functions of the self-service POS terminal 10. The CPU 11, the ROM 12, the RAM 13, and the HDD 14 are connected to one another via a bus 15. The CPU 11, the ROM 12, and the RAM 13 make up a control unit 100. That is, the CPU 11 operates according to a control program stored in the ROM 12 or the HDD 14 and loaded on the RAM 13, whereby the control unit 100 executes control processing relating to the self-service POS terminal 10 explained below. The self-service POS terminal 10 may include a nonvolatile storage medium other than the HDD 14 such as a flash memory.

The control unit 100 is connected to an input device 171, a display 172, a printer 173, a card reader 174, a code reader 175, and the change machine 20 via the bus 15 and the controller 16. The input device 171, the display 172, the printer 173, the card reader 174, and the code reader 175 are connected to the controller 16 via respective connection lines 531 to 535. The self-service POS terminal 10 is connected to any one of the change machines 20 via the controller 16 and the connection line 521. The input device 171 is, for example, a touch panel or operation buttons. The display 172 is a liquid crystal display, an organic EL display, or the like. The printer 173 is, for example, a receipt printer. The card reader 174 is a device capable of reading a credit card and the like. The code reader 175 is a device capable of reading a symbol such as a barcode attached to a commodity.

The control unit 100 is connected to the network interface 18 via the bus 15. The network interface 18 is electrically connected to, via the communication line 51, the other self-service POS terminals 10, the change machines 20, the store computer 40, and the display device 3 set in the store. The network interface 18 performs transmission and reception of information to and from the other self-service POS terminals 10, the change machines 20, the store computer 40, and the display device 3.

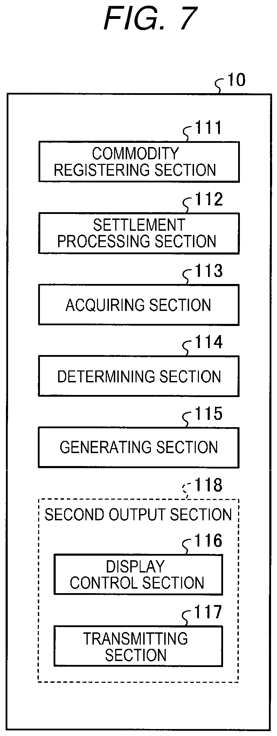

FIG. 7 is a functional diagram of the self-service POS terminal 10 according to an embodiment. As illustrated in FIG. 7, the self-service POS terminal 10 when operating includes a commodity registering section 111, a settlement processing section 112, an acquiring section 113, a determining section 114, a generating section 115, a display control section 116, and a transmitting section 117. The commodity registering section 111, the settlement processing section 112, the acquiring section 113, the determining section 114, the generating section 115, the display control section 116, and the transmitting section 117 are performed by the control unit 100. The display control section 116 and the transmitting section 117 are collectively referred to as second output section 118.

The commodity registering section 111 executes commodity registration processing according to instructions by the customer. For example, the commodity registering section 111 acquires commodity information from a barcode read by the code reader 175 and executes registration processing for the commodity indicated by the commodity information.

If the customer performs settlement operation, the settlement processing section 112 executes settlement processing. For example, the settlement processing section 112 performs, based on the commodity information stored in the RAM or the like by the registration processing, display of a total amount relating to a transaction for which the settlement processing is performed, and calculation of change based on cash deposited by the customer and displaying the change. If the customer selects cash settlement, the settlement processing section 112 instructs the change machine 20 to issue the change due after receiving a cash payment.

The acquiring section 113 acquires cash balance information 90 output by the plurality of change machines 20. The acquiring section 113 saves the acquired cash balance information 90 in the HDD 14.

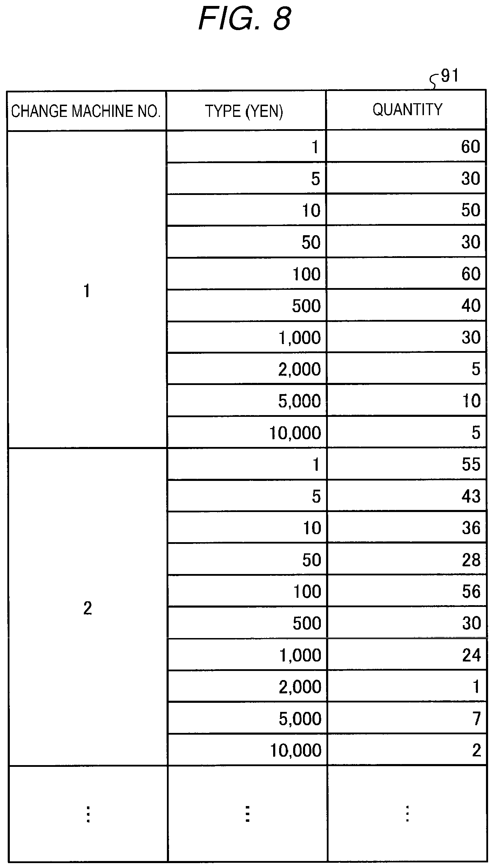

FIG. 8 is a diagram illustrating cash balance information 91 for each of the change machines 20 saved in the self-service POS terminal 10 in an embodiment. As illustrated in FIG. 8, the cash balance information 91 for each of the change machines 20 includes identification information of the change machines 20 associated with the quantities of bills and coins by type stored in the change machines 20.

Referring back to FIG. 7, the determining section 114 determines, based on the acquired cash balance information 90, whether the cash balance in each of the plurality of change machines 20 is within a predetermined range. In this context, "the cash balance is within the predetermined range" means that the quantities for each of the types of bills and coins stored in the change machine 20 are equal to or more than thresholds respectively set for each of the types of the bills or the coins.

More specifically, the determining section 114 refers to the cash balance information 91 for each of the change machines 20 saved in the HDD 14 and determines whether each of the quantities of each of the types of bills and coins in each of the change machines 20 a is equal to or more than the required threshold. The determining section 114 determines that, when the quantities of the bills or the coins of all the types are equal to or more than the required thresholds, the change machine 20 is a "usable" change machine 20. If the quantity of the bill or the coin of any one of the types stored in the change machine 20 is less than the required threshold, the determining section 114 determines that a cash balance of the change machine 20 is not within the predetermined range. In this particular embodiment, the threshold is a lower limit value of the cash balance. However, an upper limit value may also be set. The thresholds are saved, for example, in the HDD 14 of the self-service POS terminal 10. An administrator of the store may be able to change the threshold settings.

The determining section 114 determines that, among the change machines 20 included in the POS system 1, the change machine 20 that has not output cash balance information 90 for a predetermined time or more since the last output of the cash balance information 90, is "nonoperating". This is because, since the change machine 20 is set to regularly transmit the cash balance information 90 at a predetermined time (or at regular intervals) during operation, the change machine 20 that has not output the cash balance information 90 for the predetermined time or more is considered to not being operating as intended, for example, a power supply of the change machine 20 may be turned off. For example, the determining section 114 determines that the change machine 20 that has not output the cash balance information 90 for some predetermined time or more to the virtual data space 60 of the DDS is "nonoperating".

The determining section 114 determines that the self-service POS terminal 10 associated with the "usable" change machine 20 is a "usable" self-service POS terminal 10. The determining section 114 determines that the self-service POS terminal 10 associated with the "unusable" change machine 20 is an "unusable" self-service POS terminal 10. The determining section 114 determines that the self-service POS terminal 10 associated with the "nonoperating" change machine 20 is the "nonoperating" self-service POS terminal 10. As illustrated in FIG. 3, the determining section 114 generates the determination data 80 in which a determination result is associated with identification information of the self-service POS terminal 10 and saves the determination data 80 in the HDD 14.

The generating section 115 generates image data of the guidance screen 70 based on the determination result by the determining section 114. For example, the generating section 115 generates, based on the determination data 80 saved in the HDD 14, image data for displaying the "usable", "unusable", and "nonoperating" self-service POS terminals 10 in different colors as in the guidance screen 70 explained with reference to FIG. 5. In an embodiment, the self-service POS terminal 10 generates the image data of the guidance screen 70. However, the display device 3 may generate the image data of the guidance screen 70.

The display control section 116 outputs the acquired cash balance information 90 for each of the plurality of change machines 20. More specifically, the display control section 116 causes the display 172 to display a cash balance check screen in which the acquired cash balance information 90 is respectively associated with each of the plurality of change machines 20.

FIG. 9 is a diagram illustrating a cash balance check screen 92 according to an embodiment. As illustrated in FIG. 9, the display control section 116 controls the display 172 to display identification information (i.e., the unique number) of the change machines 20 and the remaining number (i.e., the quantity) of each of types of coins or bills stored in the change machine 20. The display control section 116 controls the display 172 to display the remaining number of each of the types of the coins or the bills and a threshold for each of the types of the coins or the bills in association with each other. For example, if a threshold of a type of a coin "one yen" is "forty", the display control section 116 controls the display 172 to display the remaining number of "one yen" and the threshold "forty" of the "one yen" so that the operator may visually compare them.

In FIG. 9, the cash balance check screen 92 showing the cash balance information 90 for each of the change machines 20 is illustrated. However, the cash balance check screen 92 may display the cash balance information 90 of the plurality of change machines 20 as a list. The self-service POS terminals 101 to 104 are capable of displaying, as the cash balance check screen 92, the cash balance information 90 of all the change machines 201 to 204 belonging to the POS system 1.

A display form of the cash balance check screen 92 is not limited to a graph illustrated in FIG. 9. The remaining number (i.e., the quantity) of each of the types may be displayed as a numerical value. A warning or the like may be displayed on the cash balance check screen 92 if the remaining number of each of the types of the coins or the bills of each of the plurality of change machines 20 falls below the threshold.

If the determining section 114 determines that the self-service POS terminal 10 is in the unusable state, the display control section 116 controls the display 172 to display a message indicating that the self-service POS terminal 10 is unusable.

Referring back to FIG. 7, the transmitting section 117 controls the network interface 18 to output usability information to the display device 3. In an embodiment, the transmitting section 117 controls the network interface 18 to transmit image data of the guidance screen 70 to the display device 3 as the usability information. The self-service POS terminals 101 to 104 may execute or any one of the self-service POS terminals 10 may representatively execute the generation of the image data of the guidance screen 70 and the transmission of the image data to the display device 3.

In an embodiment, the transmitting section 117 controls the network interface 18 to transmit the image data of the guidance screen 70 to the display device 3 via the communication line 51. However, the transmitting section 117 may control the network interface 18 to transmit the image data via the virtual data space 60 of the DDS.

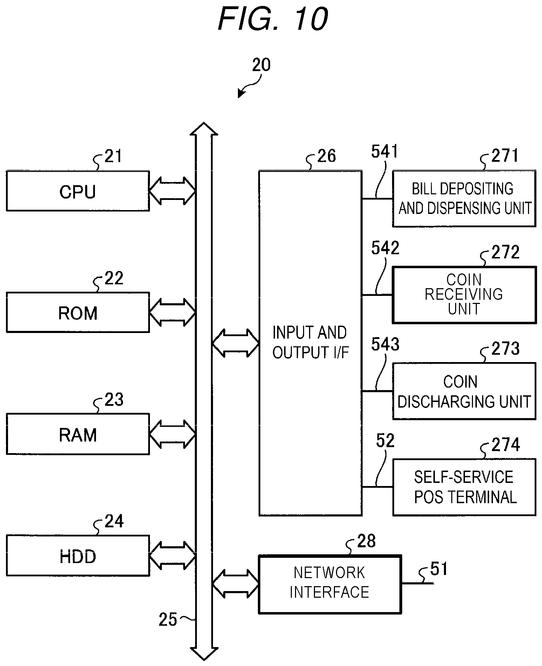

Details of the configuration of the change machine 20 are explained. FIG. 10 is a hardware diagram of the change machine 20 according to an embodiment. As illustrated in FIG. 10, the change machine 20 includes a CPU 21, a ROM 22, a RAM 23, a HDD 24, an input and output interface (I/F) 26, a bill depositing and dispensing unit 271, a coin receiving unit 272, a coin discharging unit 273, and a network interface 28. A flash memory or the like may be used in addition to or instead of the HDD 24.

The CPU 21, the ROM 22, the RAM 23, and the HDD 24 are connected to one another via a bus 25. The bill depositing and dispensing unit 271, the coin receiving unit 272, and the coin discharging unit 273 are connected to the bus 25 via the input and output interface 26 and execute cash depositing and dispensing processes under control by the CPU 21. The change machine 20 is connected to any one self-service POS terminal 10 via the input and output interface 26 and the connection line 52.

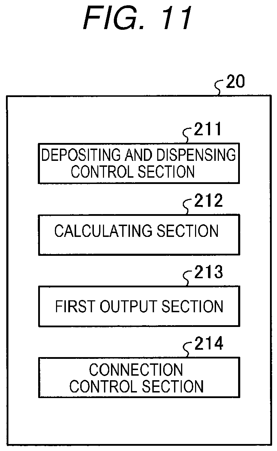

FIG. 11 is a functional diagram of the change machine 20 according to an embodiment. As illustrated in FIG. 11, the change machine 20 includes a depositing and dispensing control section 211, a calculating section 212, a first output section 213, and a connection control section 214.

The depositing and dispensing control section 211 controls the bill depositing and dispensing unit 271, the coin receiving unit 272, and the coin discharging unit 273 and executes cash depositing and dispensing processes under control by the self-service POS terminal 10 associated with the change machine 20.

The calculating section 212 calculates a quantity for each of types of coins or bills stored in the change machine 20. For example, the calculating section 212 calculates the present number of coins or bills from the number of coins or bills stored in the change machine 20 by an administrator, and the number of coins or bills deposited or dispensed via the bill depositing and dispensing unit 217, the coin receiving unit 272, and/or the coin discharging unit 273.

The calculating section 212 calculates, for example, at a predetermined time, the present number of coins or bills of the change machine 20, and saves a result of the calculation in the HDD 24 as the cash balance information 90. Alternatively, the calculating section 212 may calculate, each time settlement processing is performed, the present number of coins or bills of the change machine 20 and save a result of the calculation in the HDD 24 as the cash balance information 90.

The first output section 213 outputs, in association with identification information of the change machine 20, the cash balance information 90 representing a cash balance of the change machine 20 in a form receivable by the self-service POS terminals 101 to 104. In an embodiment, the first output section 213 outputs, at every predetermined time, the cash balance information 90 representing the cash balance of the change machine 20 to the virtual data space 60 of the DDS in association with the identification information of the change machine 20. The predetermined time may be specified in advance or may be changeable by the administrator.

A communication method for the change machine 20 and the self-service POS terminal 10 is not limited to the DDS. The first output section 213 may control the network interface 28 to broadcast the cash balance information 90 to the self-service POS terminals 101 to 104.

The connection control section 214 manages network connection of the change machine 20. For example, the connection control section 214 determines whether the change machine 20 is connected to a network in the store via the communication line 51.

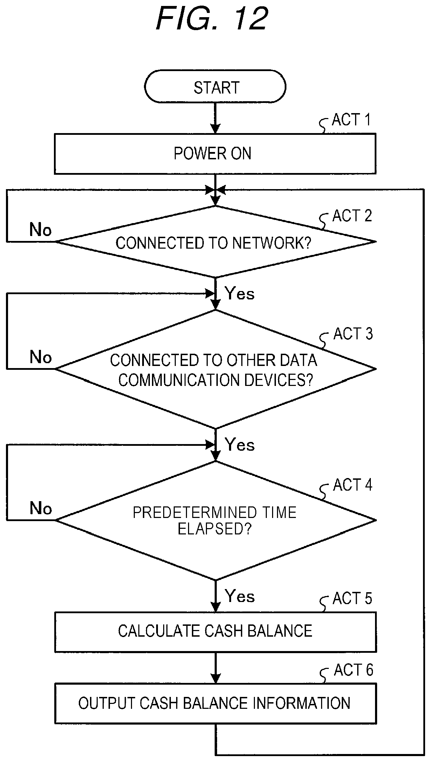

A flow of output processing for the cash balance information 90 executed by the change machine 20 is explained. FIG. 12 is a flowchart of outputting the cash balance information 90 executed by the change machine 20 according to an embodiment. Processing of the flowchart is executed in each of the change machines 201 to 204 included in the POS system 1.

First, if the change machine 20 is turned on and starts (ACT 1), the connection control section 214 of the change machine 20 determines whether the change machine 20 is connected to a network in the store (ACT 2). For example, if the change machine 20 is not connected to the network in the store via the communication line 51 ("No" in ACT 2), the connection control section 214 repeats the processing in ACT 2 and checks connection to the network.

If determining that the change machine 20 is connected to the network in the store via the communication line 51 ("Yes" in ACT 2), the connection control section 214 determines whether the change machine 20 is connected to other data communication target devices via the network (ACT 3). The other data communication target devices are DDS connection target devices. For example, if the change machine 201 is executing the output processing, the other data communication target devices are the change machines 202 to 204 and the self-service POS terminals 101 to 104.

For example, if the change machine 201 is connectable to any one of the change machines 202 to 204 and any one of the self-service POS terminals 101 to 104 via the network, the connection control section 214 determines that the change machine 201 is connected to the other data communication target devices.

If the self-service POS terminals 10 and the change machines 20 set in the store are divided into several groups, the connection control section 214 determines whether the other devices belonging to the same group are connected to the change machine 20.

If determining that the change machine 20 is not connected to the other data communication target devices via the network ("No" in ACT 3), the connection control section 214 repeats the processing in ACT 3 and waits for the change machine 20 to be connected to the other devices.

If the connection control section 214 determines that the change machine 20 is connected to the other data communication target devices via the network ("Yes" in ACT 3), the calculating section 212 determines whether a predetermined time has elapsed from the last transmission of the cash balance information 90 (ACT 4).

If determining that the predetermined time has elapsed from the last transmission of the cash balance information 90, the calculating section 212 calculates the present number of coins or bills of the change machine 20 (ACT 5).

The first output section 213 outputs the cash balance information 90 calculated by the calculating section 212 to the virtual data space 60 of the DDS (ACT 6). The processing of the flowchart returns to the processing in ACT 2. The processing of the flowchart is continuously executed while the change machine 20 is operating.

A flow of cash balance check processing executed by the self-service POS terminal 10 is explained.

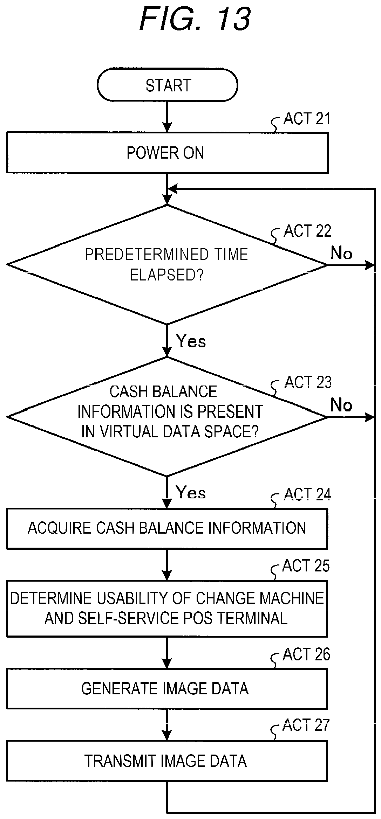

FIG. 13 is a flowchart of cash balance check processing executed by the self-service POS terminal 10 according to an embodiment. Processing of the flowchart is executed by each of the self-service POS terminals 10 included in the POS system 1.

First, if the self-service POS terminal 10 is turned on and starts (ACT 21), the acquiring section 113 of the self-service POS terminal 10 determines whether a predetermined time has elapsed from the last acquisition of the cash balance information 90 (ACT 22).

If determining that the predetermined time has not elapsed from the last acquisition of the cash balance information 90 ("No" in ACT 22), the acquiring section 113 repeats the processing in ACT 22 and stays on standby.

If determining that the predetermined time has elapsed from the last acquisition of the cash balance information 90 ("Yes" in ACT 22), the acquiring section 113 determines whether the cash balance information 90 is present in the virtual data space 60 of the DDS (ACT 23). If determining that the cash balance information 90 is absent in the virtual data space 60 of the DDS ("No" in ACT 23), the acquiring section 113 returns to the processing in ACT 22.

The acquiring section 113 determines that the cash balance information 90 is present in the virtual data space 60 of the DDS ("Yes" in ACT 23), the acquiring section 113 acquires, from the virtual data space 60, the cash balance information 90 output by each of the change machines 201 to 204 (ACT 24).

The determining section 114 determines usability of the change machines 20 and the self-service POS terminals 10 based on the acquired cash balance information 90 (ACT 25).

For example, if both of the quantities for each of types of coins and bills included in the cash balance information 90 output from the change machine 201 and the change machine 203 are equal to or more than the thresholds, as explained with reference to FIG. 3, the determining section 114 determines that the change machine 201 and the change machine 203 are "usable". In such a case, the determining section 114 determines that the self-service POS terminal 101 associated with the change machine 201 and the self-service POS terminal 103 associated with the change machine 203 are "usable".

If the quantity of any one of the types of the coins and the bills included in the cash balance information 90 output from the change machine 202 is less than a threshold, the determining section 114 determines that the change machine 202 is "unusable" as explained with reference to FIG. 3. In such a case, the determining section 114 determines that the self-service POS terminal 102 associated with the change machine 202 is "unusable".

If the cash balance information 90 output from the change machine 204 is absent on the virtual data space 60 or if the time when the cash balance information 90 that was generated and output from the change machine 204 on the virtual data space 60 is earlier than the time when the last acquisition processing was executed for the cash balance information 90, the determining section 114 determines that the change machine 204 is "nonoperating" as explained with reference to FIG. 3. In such a case, the determining section 114 determines that the self-service POS terminal 104 associated with the change machine 204 is "nonoperating".

The generating section 115 generates, based on a result of the determination by the determining section 114, image data representing a result of the determination of the usability of the self-service POS terminals 10, that is, image data of the guidance screen 70 (ACT 26).

The transmitting section 117 controls the network interface 18 to transmit image data of the guidance screen 70 to the display device 3 (ACT 27). The display device 3 receives the image data and displays the guidance screen 70, whereby the customer can check usability of the self-service POS terminals 10. The processing of the flowchart returns to the processing in ACT 22. The processing of the flowchart is continuously executed while the self-service POS terminal 10 is operating.

The processing in ACT 21 to ACT 23 is executed in each of the self-service POS terminals 10 included in the POS system 1. However, any one self-service POS terminal 10 may representatively execute the processing in ACT 24 to ACT 26.

A flow of cash balance display processing executed by the self-service POS terminal 10 is explained.

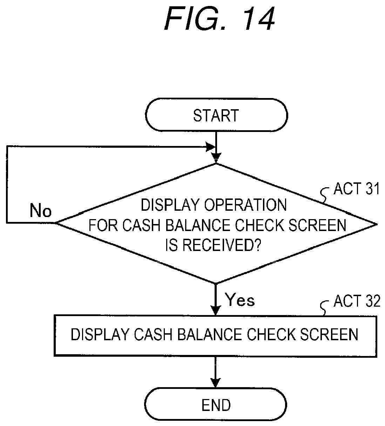

FIG. 14 is a flowchart of cash balance display processing executed by the self-service POS terminal 10 according to an embodiment.

First, the display control section 116 of the self-service POS terminal 10 determines whether display operation for the cash balance check screen 92 by the store clerk or the like is received from the input device 171 (ACT 31). If determining that the display operation for the cash balance check screen 92 is not received ("No" in ACT 31), the display control section 116 repeats the processing in ACT 31.

If determining that the display operation for the cash balance check screen 92 is received ("Yes" in ACT 31), the display control section 116 generates a screen of the cash balance check screen 92 from the cash balance information 91 for each of the change machines 20 and the threshold saved in the HDD 14, and controls the display 172 to display the cash balance check screen 92 (ACT 32).

For example, the store clerk performs the display operation for the cash balance check screen 92 when the display device 3 shows that the self-service POS terminal 10 is "unusable" or the customer is not using the self-service POS terminal 10.

The store clerk checks a cash balance of the change machine 20 short in cash on the cash balance check screen 92 displayed on the display 172, and recognizes a type and a quantity of cash to be supplied. The store clerk then supplies the appropriate amount of cash to the change machine 20. Additionally, the store clerk may collect cash from the change machine 20 having a cash balance equal to or more than the threshold, and supply the cash to the other change machines 20 short in cash. Processing for transferring cash between the change machines 20 can be performed by, for example, the settlement processing section 112 of the self-service POS terminal 10, upon receipt of the input operation by the store clerk, controlling the printer 173 to issue a depositing and dispensing slip.

The display control section 116 may control the display 172 to display the cash balance check screen 92 representing the cash balance information 90 of all the self-service POS terminals 10 included in the POS system 1 or display the cash balance check screen 92 representing the cash balance information 90 of any self-service POS terminal 10 selected by a user.

As explained above, in the POS system 1, the change machine 20 outputs the cash balance information 90 through, for example, the DDS in a form receivable by the plurality of self-service POS terminals 10 included in the POS system 1. The self-service POS terminals 10 acquire the cash balance information 90 output by the plurality of change machines 20 included in the POS system 1. The self-service POS terminals 10 output the received cash balance information 90 for each of the change machines 20. Accordingly, the self-service POS terminals 10 are capable of outputting the cash balance information 90 of each of the plurality of change machines 20. Therefore, the store clerk can check the cash balance information 90 of each of the plurality of change machines 20 from any one self-service POS terminal 10 set on the floor. Accordingly, the store clerk can save time for checking the self-service POS terminals 10 one by one or moving from the floor to the back office in order to operate the store computer 40 that centrally manages data. Time for work of the store clerk is reduced.

In the POS system 1, the self-service POS terminal 10 causes the display 172 of the self-service POS terminal 10 to display cash balance information 90 for each of the plurality of change machines 20. Accordingly, the store clerk can easily check the cash balance information 90 of the change machines 20 from the self-service POS terminal 10 set on the floor of the store.

The POS system 1 further includes the display device 3 separately from the self-service POS terminals 10 and the change machines 20. The self-service POS terminal 10 outputs, to the display device 3, usability information concerning usability of the plurality of self-service POS terminals 10 included in the POS system 1. The display device 3 displays the guidance screen 70 based on information transmitted from the self-service POS terminal 10. Accordingly, before reaching the self-service POS terminal 10 in order to register a commodity that the customer purchases, the customer can recognize the usability of the self-service POS terminals 10 by the guidance screen 70 displayed on the display device 3. With this configuration, it is possible to reduce occurrence of an event in which, for example, the customer does not notice before reaching the self-service POS terminal 10 that the self-service POS terminal 10 cannot be used and wait in line for using another self-service POS terminal 10.

In the POS system 1, the display device 3 displays information about the self-service POS terminal 10 associated with the nonoperating change machine 20 on the guidance screen 70 to distinguish from the other self-service POS terminal 10 associated with the operating change machine 20. Accordingly, before operating such a self-service POS terminal 10, the customer can grasp that the self-service POS terminal 10 cannot be used. With such a guidance screen 70, the store clerk can also easily grasp the self-service POS terminal 10 for which the change machine 20 is not operating. Therefore, the store clerk can quickly take measures for, for example, turning on the change machine 20.

### (Modification 1)

In the embodiments explained above, the POS system 1 includes the self-service POS terminals 101 to 104, the change machines 201 to 204, the display device 3, and the store computer 40. However, the configuration of the POS system 1 is not limited to this. For example, a configuration of the POS system 1 not including the display device 3 or the store computer 40 may be adopted.

In the embodiments explained above, the POS terminal 10 is a self-service settlement device. However, the settlement device may be a semi-self-service terminal not having a commodity registering function, or a conventional POS terminal operated by a store clerk.

### (Modification 2)

In the embodiments explained above, the self-service POS terminal 10 and the change machine 20 perform the communication by the DDS. However, the self-service POS terminal 10 and the change machine 20 may perform communication according to a method other than the DDS.

In the embodiments explained above, the self-service POS terminal 10 and the change machine 20 perform the communication by the DDS. The display device 3 and/or the store computer 40 may be added to the communication target devices by the DDS.

### (Modification 3)

In the embodiments explained above, an unusable state of the change machine 20 occurs when the cash balance in the change machine 20 falls below a threshold. However, the cases which render a change machine 20 unusable is not limited to this. For example, if the change machine 20 falls into the unusable state because of other causes, the change machine 20 may inform the self-service POS terminals 101 to 104 that it is in the unusable state.

The change machine 20 may be unusable, for example, if the bill depositing and dispensing unit 271, the coin receiving unit 272, or the coin discharging unit 273 of the change machine 20 is clogged with foreign matter, if these units are broken, or if an amount of cash stored in the change machine 20 exceeds an upper limit value.

Even if the change machine 20 is in the usable state, the corresponding self-service POS terminal 10 is sometimes unusable. This occurs, for example, if the remaining amount of receipt paper of the self-service POS terminal 10 falls below a threshold or if an error occurs in other devices connected to the self-service POS terminal 10. In such a case, the determining section 114 may determine that the self-service POS terminal 10 is unusable based on these other reasons. According to this modification, it can be displayed on the guidance screen 70 that the change machine 20 or the self-service POS terminal 10 is unusable for reasons other than the cash balance being below a threshold. Therefore, the customer can more surely identify which of the self-service POS terminals 10 is usable.

### (Modification 4)

In the embodiments explained above, if the change machine 20 becomes unusable, the self-service POS terminal 10 connected to the change machine 20 also becomes unusable. However, the self-service POS terminal 10 may be usable for settlement methods other than cash settlement. In such a case, the guidance screen 70 may display usability of the self-service POS terminal 10 for each of settlement methods such as the cash settlement and cashless settlement.

The programs executed by the self-service POS terminal 10 or the change machine 20 may be provided by a non-transitory computer-readable recording medium such as a CD-ROM, a flexible disk (FD), a CD-R, or a DVD (Digital Versatile Disk) as executable or installable files.

The programs executed by the self-service POS terminal 10 or the change machine 20 may be stored on a computer connected to a network such as the Internet and downloaded through the network. The programs executed by the self-service POS terminal 10 or the change machine 20 may be provided or distributed through the network such as the Internet. The programs executed by the self-service POS terminal 10 or the change machine 20 may be stored in a ROM or the like in advance.

The various functional sections of the self-service POS terminal 10 (such as, the commodity registering section 111, the settlement processing section 112, the acquiring section 113, the determining section 114, the generating section 115, the display control section 116, and the transmitting section 117) can be implemented as software modules. The CPU reads out the modules from the storage medium and loads them on the RAM 13 and executes program instructions accordingly.

The various sections of the change machine 20 (such as the depositing and dispensing control section 211, the calculating section 212, the first output section 213, and the connection control section 214) can be implemented as software modules. The CPU reads out the modules from the storage medium and loads them on the RAM 23 and executes program instructions accordingly.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A cash balance check system, comprising:
a plurality of settlement devices each configured to perform settlement processing for commodities to be purchased by a customer; and
a plurality of change machines each corresponding to one of the settlement devices and configured to perform cash deposit and dispense processing for the settlement processing, wherein
each of the change machines is configured to generate cash balance information indicating a remaining amount of cash and output the cash balance information in association with identification information for the change machine, and
each of the settlement devices is configured to acquire the cash balance and identification information output from each of the change machines and output the acquired cash balance and identification information for each of the change machines.

2. The cash balance check system according to claim 1, wherein
each of the settlement devices includes a display, and
the cash balance and identification information for each of the change machines is output via the display.

3. The cash balance check system according to claim 1, further comprising a display device, wherein
each of the settlement devices is further configured to:
determine, based on the acquired cash balance and identification information, whether the remaining amount of cash in each of the change machines falls within a particular range;
identify a status from a plurality of possible statuses for each of the settlement devices based on the remaining amount of cash; and
transmit the status of each of the settlement devices to the display device.

4. The cash balance check system according to claim 3, wherein the plurality of possible statuses includes a first status indicating that the settlement device is available for the settlement processing and a second status indicating that the settlement device is unavailable for the settlement processing.

5. The cash balance check system according to claim 4, wherein, when the remaining amount of cash in one of the change machines falls within the particular range, the status of the corresponding settlement device is determined to be the first status, and, when the remaining amount of cash in another one of the change machines does not fall within the particular range, the status of the corresponding settlement device is determined to be the second status.

6. The cash balance check system according to claim 4 or 5, wherein the display device is configured to display a first guidance screen indicating the status of each of the settlement devices.

7. The cash balance check system according to claim 6, wherein the settlement devices that have been determined to be the first status and the settlement devices that have been determined to be the second status are identified with different text on the first guidance screen.

8. The cash balance check system according to claim 6, wherein the settlement devices that have been determined to be the first status and the settlement devices that have been determined to be the second status are identified with different icons on the first guidance screen.

9. The cash balance check system according to any one of claims 4 to 8, wherein each of the settlement devices includes a display and is further configured to display, on the display, a second guidance screen separately indicating the settlement devices that have been determined to be the first status and the settlement devices that have been determined to be the second status.

10. The cash balance check system according to any one of claims 1 to 9, wherein each of the settlement devices and change machines is configured to access a virtual data storage where the cash balance and identification information from each of the change machines is stored.

11. A method carried out by a cash balance check system including a plurality of settlement devices and a plurality of change machines corresponding to the respective settlement devices, the method comprising:
performing settlement processing for commodities to be purchased by a customer;
performing cash deposit and dispense processing during the settlement processing;
generating cash balance information indicating a remaining amount of cash in each of the change machines, and outputting the cash balance information from the change machines in association with identification information for the respective change machine generating the cash balance information; and
acquiring the cash balance and identification information output from each of the change machines by using at least one of the settlement devices, and outputting the acquired cash balance and identification information for each of the change machines from the at least one of the settlement devices.

12. The method according to claim 11, wherein each of the settlement devices includes a display, and the cash balance and identification information are output via the display.

13. The method according to claim 11, further comprising:
determining whether the remaining amount of cash in each of the change machines falls within a particular range based on the acquired balance and identification information for each of the change machines;
determining a status from a plurality of possible statuses for each of the settlement devices based on the remaining amount of cash; and
transmitting the determined status of each of the settlement devices to a display device included in the cash balance check system.

14. The method according to claim 13, wherein the plurality of possible statuses includes a first status indicating that the settlement device is available for the settlement processing and a second status indicating that the settlement device is unavailable for the settlement processing.

15. The method according to any one of claims 11 to 14, further comprising acquiring, from a virtual data space, the cash balance and identification information output from each of the plurality of change machines and stored in the virtual data space.
